# EUROPEAN PATENT APPLICATION

(11) **EP 4 725 718 A1**
(43) Date of publication of application: **15.04.2026**
(21) Application number: 25204551.3
(22) Date of filing: 25.09.2025
(51) Int. Cl.: B60C 23/04

(54) **TIRE MONITORING DEVICE AND TIRE**

(30) Priority: 09.10.2024 US 202463705243 P; 12.09.2025 US 202519327721
(71) Applicant: The Goodyear Tire & Rubber Company, Akron, OH 44316 (US)
(72) Inventor: HILGER, Stephan Peter, B-4770 Medell (BE); BUCHER, Frank, D-54329 Konz (DE); GRIFFOIN, Jean-Claude Patrice Philippe, L-9170 Mertzig (LU); GABRIEL, Sabine Chantal, B-6700 Arlon (BE); MARTINS AMARAL, Thiago, L-7750 Colmar-Berg (LU)
(74) Representative: Kutsch, Bernd

(57) **Abstract**

A tire monitoring device (10) is disclosed comprising a sensor unit (100) and a sensor unit holder (200). The sensor unit (100) comprises a sensor assembly (110) and an encapsulation material (120), wherein the sensor assembly (110) is at least predominantly enclosed by the encapsulation material (120). The sensor unit holder (200) includes i) a bottom portion (223) comprising a bottom surface, and ii) a top portion (224), which is opposite to the bottom portion (223). The sensor unit (100) is embedded in and bonded to the top portion (224). Also disclosed is a tire (1) comprising such a tire monitoring device (10).

## Description

### Field of the Invention

The present invention is directed to a tire monitoring device, particularly including a sensor unit and a sensor unit holder. Furthermore, the present invention is directed to a tire, such as a pneumatic tire, comprising the tire monitoring device.

### Background of the Invention

Many modern tires are equipped with tire monitoring devices, such as for monitoring tire pressure. In some tires, such sensor devices are mounted to the tire within the tire cavity. **In** one existing system, a tire pressure sensor is removably and resiliently held in a hollow rubber composition container, which is attached to the innerliner of the tire. While such a system may be an appropriate solution for many tire monitoring applications, there is room for improvement left for other tire monitoring applications, particularly for ultra-high performance (UHP) or ultra-ultra-high performance (UUHP) tire applications.

### Summary of the Invention

The invention relates to a tire monitoring device in accordance with claim 1, and to a tire in accordance with claim 1.

Dependent claims refer to preferred embodiments of the invention.

In one aspect of the present invention, the present invention is directed to a tire monitoring device comprising a sensor unit which comprises a sensor assembly and an encapsulation material, wherein the sensor assembly is at least predominantly enclosed by the encapsulation material. Furthermore, the tire monitoring device comprises a sensor unit holder, wherein the sensor unit holder includes i) a bottom portion comprising a bottom surface, and ii) a top portion, which is opposite to the bottom portion, and wherein the sensor unit is embedded in and bonded to the top portion of the sensor unit holder.

### Brief Description of Drawings

The invention will be described by way of example and with reference to the accompanying drawings in which:
FIG. 1 is a schematic partial cross-section of a pneumatic tire comprising a tire monitoring device in accordance with an embodiment of the present invention;
FIG. 2 is a schematic cross-section of a tire monitoring device according to an embodiment of the present invention;
FIG. 3 is a schematic top view of the tire monitoring device shown in Figure 2;
FIG. 4 is a schematic cross-section of another tire monitoring device according to another embodiment of the present invention;
FIG. 5 is a schematic top view of the tire monitoring device shown in Figure 4; and
FIG. 6 is a flowchart showing an embodiment of a method of providing or manufacturing a tire with a sensor device in accordance with an embodiment of the present invention.

### Detailed Description of Preferred Embodiments of the Invention

According to a first aspect of the present invention, the invention is directed to a tire monitoring device comprising a sensor unit comprising a sensor assembly and an encapsulation material, wherein the sensor assembly is at least predominantly enclosed by the encapsulation material. Furthermore, the tire monitoring device comprises a sensor unit holder, wherein the sensor unit holder includes i) a bottom portion comprising a bottom surface, preferably for attachment to a surface of a tire, and ii) a top portion, which is opposite to the bottom portion, and/or the bottom surface, and wherein the sensor unit is embedded in and bonded to the top portion.

Thus, on the one hand, the present invention provides a sensor unit comprising the sensor assembly which is enclosed by the encapsulation material. Such an encapsulation material protects the sensor assembly and/or fixes it in its position in the encapsulation material. **In** particular, components of the sensor assembly can be held stationarily relative to each other. On the other hand, the tire monitoring device comprises a sensor unit holder, in which the sensor unit is embedded and to which the sensor unit is bonded. Thus, the sensor unit holder can be attached with its bottom surface to a tire and is bonded with its opposite top portion to the sensor unit. In particular, this allows to manufacture the sensor unit with a different material, and specifically with a different encapsulation material than the material forming (or predominantly forming) the sensor unit holder. Moreover, said embedding and bonding of the sensor unit to the sensor unit holder provides a fixed connection between the sensor unit holder and the sensor unit. The inventors have found that such a bond may significantly reduce hysteresis and/or heat generation, particularly when tires are rotating at very high speeds, such as compared to sensors which are resiliently and/or removably held in a cavity of a rubber composition container.

In one preferred embodiment, the sensor unit holder comprises a polymer-based material, or preferably, at least predominantly consists of and/or is at least predominantly formed by a polymer-based material. Optionally, the sensor unit is embedded in and bonded to the polymer-based material in the top portion of the sensor unit holder. For instance, in one option, the polymer-based material may be bonded to the encapsulation material. In another option, the sensor unit may comprise an (outer) shell, which at least partially encloses the encapsulation material and the sensor assembly, wherein the polymer-based material of the sensor unit holder may be bonded to the shell of the sensor unit.

In another preferred embodiment, the sensor unit includes a bottom portion and/or a bottom surface which is essentially parallel to the bottom surface of the sensor unit holder, and wherein the sensor unit holder and the sensor unit include a height determined perpendicular to the bottom surface of the sensor unit holder. Optionally, the bottom portion of the sensor unit is bonded at its bottom surface and/or circumferentially to the sensor unit holder, or in other words, along its entire circumference, preferably essentially perpendicular to its height. Thus, in other words, the bottom portion of the sensor unit may be surrounded by the sensor unit holder and bond to the sensor unit holder, or its material, such as said polymer-based material of the sensor unit holder.

In another preferred embodiment, the polymer-based material is selected from one or more of a polyurethane based material, and a cast elastomer. It is emphasized that each of these materials is known as such in the art. In particular, polyurethane based (polymer) materials and/or cast elastomers, such as cast polyurethanes, or cast polyurethane elastomers, are available from various manufacturers, such as from the company BASF, Germany, (e.g., of the Elasturan^{™} product line, or of the Elastocast^{™} product line), or from the company Huntsman, USA, (e.g., of the Tecnothane^{™} product line, or of the Daltocast^{™} product line), or from the company Covestro, Germany (e.g., of the Vulkollan^{™} product line). Optionally, one or more of the above materials may be cord and/or fiber reinforced, such as including one or more of cords and fibers comprising textile material and/or glass fiber material. Encapsulation materials mentioned herein may optionally also be cord and/or fiber reinforced, such as with the materials listed herein above. Optionally, said polymer-based materials include a glass transition temperature of less than -30°C, preferably of less than - 40°C, or even less than -45°C, measured by thermomechanical analysis (TMA) under ISO 11359-2:1999-10, or equivalent. In particular, said elastomers preferably include such a relatively low glass transition temperature, so that they are elastomeric above this glass transition temperature.

In still another preferred embodiment, the polymer-based material is one or more of a polyurethane elastomer, a cast polyurethane, and a cast polyurethane elastomer. Such materials have been found to be particularly suitable for preferred embodiments of the present invention. In particular, such materials can be bonded directly to the sensor unit without an additional adhesive. The absence of such an adhesive can be easily determined by a person skilled in the art by visual check of the interface between the sensor unit and the sensor until holder (such as of a cut section, and/or with a microscope, and/or other analytical techniques known in the art). As mentioned above, these materials are as such available to the person skilled in the art. One preferred (but non-limiting) example of a cast polyurethane elastomer is a Tecnothane^{™} MPT from Huntsman, USA. Moreover, such materials are well suitable for bonding to an innerliner of a tire, e.g., via an adhesive tape, or suitable adhesives, such as one or more of super glue, a pressure sensitive adhesive, and a cyano-acrylate based adhesive.

In still another preferred embodiment, the sensor unit holder is at least predominantly formed and/or consists of the polymer-based material.

In still another preferred embodiment, the polymer-based material is a cast elastomer, cast on the sensor unit (preferably onto the bottom portion of the sensor unit), and/or forming the top portion (of the sensor unit holder) bonded to the bottom portion of the sensor unit. Casting on the sensor unit can, e.g., be observed on the final tire monitoring device, particularly in view of the fixed bond between the sensor unit and the sensor unit holder and/or the absence of adhesives between the sensor unit and the sensor unit holder.

In still another preferred embodiment, the interface between the sensor unit and the sensor unit holder is devoid of an (additional) adhesive. In another embodiment, an (additional) adhesive can be present at the interface between the sensor unit and the sensor unit holder. However, the latter is typically less preferred as it may increase manufacturing complexity.

In still another preferred embodiment, said (cast) polyurethane elastomer is at least based on one or more of: an isocyanate component (e.g., comprising one or more diisocyanates), a polyol component (e.g., comprising one or more polyester polyols, and/or polyether polyols), and optionally one or more extenders (e.g., comprising one or more of diamines and diols, such as butanediol and/or diethyltoluenediamine). It is emphasized that the synthesis of such polyurethanes or polyurethane elastomers is known as such in the art. In addition, or alternatively, the polyurethane elastomer can be further described as being unfoamed. In other words, as known in the art, a cast polyurethane, or cast polyurethane elastomer is not a foam material or devoid of foam material.

In still another preferred embodiment, the polymer-based material (such as the cast elastomer, or cast polyurethane elastomer) includes one or more of: an elongation at break of at least 400% (preferably at least 450%, or more preferably at least 500%, and/or at most 800%), determined according to ISO 527-2 or equivalent; a heat conductivity of at least 0.1 W/(m·K) (preferably of at least 0.2 W/(m·K)), determined according to ISO 22007-2:2008 or equivalent; a Shore-A hardness within a range of 50 to 99 (preferably, of 55, or of 60, and/or to 98), determined according to ISO 7619-1 or equivalent; a tensile strength of at least 12 MPa (preferably of at least 15 MPA, or more preferably of at least 20 MPA, or even more preferably of at least 25 MPA, and optionally of at most 100 MPa, or of at most 80 MPa), determined according to ISO 527-2 or equivalent. In particular, the tensile strength range is preferably relatively high, which allows for a firm hold and stability of the holder, such as particularly suitable for UHP, UUHP, or race tire applications.

In still another preferred embodiment, the encapsulation material is a resin (or also sometimes referred to as a casting resin), which is preferably selected from one of a polyurethane-based resin and a polyester-based resin. Polyurethane-based resins are as such known to the person skilled in the art, and are commercially available, such as from the company Wevo, Germany, (e.g., including various polyurethane-based resins of the product line Wevopur^{™}). Polyester-based resins are as such also known to the person skilled in the art, and are also commercially available, such as from the company Dupont, USA (e.g., including the polyester based resins of the Rynite^{™} product line).

In still another preferred embodiment, the encapsulation material (and/or resin) includes one or more of: an elongation at break within a range of 300% to 400% (preferably to 390%, or to 360%, or to 350%), determined according to ISO 527-2 or equivalent; a heat conductivity of at least 0.1 W/(m·K), determined according to ISO 22007-2:2008 or equivalent; a glass transition temperature of less than -45°C, determined by TMA, or equivalent; a Shore-A hardness within a range of 40 to 99, determined according to ISO 7619-1 or equivalent; a tensile strength within a range of 0.5 MPa to 15 MPa (preferably of 0.5 MPa to 11 MPa, or to 10 MPa), determined according to ISO 527-2 or equivalent; an electric volume resistivity of more than 10⁹ Ohm·cm (preferably of more than 10¹⁰ Ohm·cm, or more preferably, of more than 10¹¹ Ohm·cm, or even more preferably, of more than 10¹² Ohm·cm), determined according to DIN EN 62631-3-1:2016 or equivalent.

In still another preferred embodiment, the polymer-based material includes an elongation at break which is at least 50% higher (and preferably at most 400% higher) than the elongation at break of the encapsulation material. 50% higher shall mean here (absolute) elongation at break values, e.g., in other words, if the elongation at break of the encapsulation material is in a non-limiting example 375%, the elongation at break of the polymer-based material is at least 425%, i.e., by 50% higher than 375%. In addition, or alternatively, the Shore-A hardness of the polymer-based material is at least 5 Shore-A (values) larger (preferably at least 10 Shore-A larger and at most 30-Shore A harder) than the Shore-A hardness of the encapsulation material. In addition, or alternatively, the tensile strength of the polymer-based material is at least 5 MPa (preferably at least 10 MPa) larger (and preferably at most 50 MPa larger) than the tensile-strength of the encapsulation material. Thus, in such preferred embodiments, one or more of the elongation at break, Shore-A hardness and tensile strength of the sensor unit holder material are larger than the one or more respective properties of the encapsulation material of the sensor unit. For instance, this helps to provide a durable connection and/or holding of the sensor unit on a surface of a tire, particularly considering the forces acting on the holder during rotation of the tire. Moreover, it is typically not necessary or even not desirable, to provide the same properties to the encapsulation material. For example, the preferred polymer-based materials of the sensor unit holder may be more expensive and/or may also involve longer processing times than the encapsulation materials, which becomes particularly relevant when large numbers of sensor holders / tire monitoring devices are to be manufactured.

In still another preferred embodiment, the sensor assembly comprises one or more of (preferably, all of) a sensor, a printed circuit board, a wireless transmitter (such as a wireless network transmitter, radio frequency transmitter, Bluetooth^{™} transmitter, or other wireless transmitters known in the art), and an electric power source (such as a battery). A transceiver may also be considered as including a transmitter herein. Optionally, the encapsulation material encloses at least predominantly each of the sensor, the printed circuit board, the wireless transmitter, and the electric power source. For instance, it is possible that the printed circuit board is fully enclosed, or in other words encapsulated by the encapsulation material. A sensor is typically predominantly enclosed despite leaving an opening and/or channel for the passage of air for sensing a physical property, such as pressure and/or temperature, which is typically located at a top surface of the sensor unit. Optionally, a power source, such as a battery, does not need to be fully enclosed (but may be in other embodiments) by the encapsulation material. For instance, the battery's lateral sides and a top surface may be enclosed by the encapsulation material, and/or at least a portion of a bottom surface of the battery directed towards the bottom surface of the sensor unit holder may be at least partially non-enclosed or free of the encapsulation material. Optionally, the battery is provided in a bottom portion of the sensor unit.

In still another preferred embodiment, the sensor assembly comprises one or more of a temperature sensor, an acceleration sensor, a pressure sensor, and a strain sensor.

In still another preferred embodiment, the sensor unit includes a sensor unit bottom portion and a sensor unit top portion, wherein the sensor unit bottom portion is embedded in the top portion of the sensor unit holder, and wherein, optionally, the sensor unit bottom portion includes a sensor unit bottom surface which is preferably arranged essentially parallel to the bottom surface of the sensor unit holder. Optionally, the bottom surface of the sensor unit holder is at least as large as, or preferably at least two times larger than, the sensor unit bottom surface. Optionally, the bottom surface of the sensor unit holder is at least as large as, or preferably at least two times larger than, a projection of the sensor unit in a direction perpendicular to the bottom surface of the sensor unit holder, and/or onto the bottom surface of the sensor unit holder.

In still another preferred embodiment, the sensor unit comprises a cap at least partially enclosing the sensor assembly and/or the encapsulation material, and wherein the cap, is optionally embedded in and bonded to the sensor unit holder. In addition, or alternatively, a top portion of the cap may extend out of the sensor unit holder. Preferably, the cap is open at its bottom portion and/or includes an essentially hollow cylindrical shape with a closed top and/or with an opening at its bottom. The top may optionally be dome shaped and/or curved.

In still another preferred embodiment, the cap comprises a thermoplastic polymer, such as polyethylene terephthalate (PET) or polybutylene terephthalate (PBT). Preferably, such a polymer is additionally fiber reinforced, such as with fibers as already mentioned herein above.

In still another preferred embodiment, the sensor unit is formed by the encapsulation material enclosing the sensor assembly, and/or the encapsulation material forms at least predominantly the outer surface of the sensor unit.

In still another preferred embodiment, the sensor unit comprises a hole, preferably including a diameter of less than 2 mm, or less than 1 mm, allowing passage of air and/or gas to the sensor enclosed by the encapsulation material.

In still another preferred embodiment, the sensor unit is fixedly bonded to the sensor unit holder, and/or is non-exchangeably bonded or connected to the sensor unit holder.

In still another preferred embodiment, the sensor unit holder is free of a rubber composition, and/or is free of one or more of natural rubber (NR), synthetic polyisoprene (PI), polybutadiene (PBD) rubber, isoprene-butadiene rubber (IBR), and/or styrene-butadiene rubber (SBR). Optionally, it is also free of a filler, such as carbon black and/or silica. Optionally, the polymer-based material can also be described as non-thermoplastic.

In still another preferred embodiment, the tire monitoring device includes a (tire monitoring device) height measured from a bottom surface of the sensor unit holder (and perpendicular to that bottom surface) to a top surface, or an outermost top surface, of the sensor unit, wherein the sensor unit holder includes one or more of: i) a height of less than 50% (and/or optionally at least 5%) of the tire monitoring device height, and ii) a height of less than 50% of a total height of the sensor unit, measured perpendicular to the bottom surface of the sensor unit holder, or measured perpendicular to an inner surface of the tire, and/or an innerliner of the tire, at a mounting or attachment position of the sensor unit holder to the tire.

In another preferred aspect, the present invention is directed to a tire comprising the tire monitoring device according to the first aspect, and/or one or more of its embodiments.

In one preferred embodiment, the tire is a pneumatic (and optionally a radial) tire comprising a circumferential tread portion, and an innerliner at least partially enclosing a tire cavity of the tire, wherein the sensor monitoring device is attached to the innerliner of the tire, preferably radially below the circumferential tread portion. Of course, the tire may optionally comprise multiple further tire components, such as a pair of axially opposite bead portions, and at least one carcass ply extending from bead portion to bead portion of the pair of bead portions. The tire may also comprise a pair of axially opposite sidewalls, and a belt portion arranged between the tread portion and the carcass ply in a crown area of the tire. **In** another option, the tire comprises an overlay covering the belt portion on a radially outer side of the belt portion and radially below the tread portion.

In still another preferred embodiment, the tire monitoring device is mounted radially below a circumferential centerline of the tread portion, and/or is crossed by an equatorial plane of the tire. Such an arrangement helps to provide a well-balanced tire.

In still another preferred embodiment, the tire further comprises one or more of a double-sided adhesive tape and a transfer adhesive tape, wherein the tire monitoring device is attached with the bottom surface of the sensor unit holder to the innerliner via the one or more of the double-sided adhesive tape and the transfer adhesive tape. When the tire monitoring device is mounted and/or attached to the tire, a bottom portion or surface of the sensor unit, or sensor unit holder, respectively, preferably corresponds to a radially outer position in the tire, and a top portion or surface of the sensor unit, or sensor unit holder, respectively, preferably corresponds to a radially inner position in the tire.

In still another preferred embodiment, the tire monitoring device is attached to the innerliner via one or more of an adhesive, co-curing, a rubber composition patch, a transfer adhesive tape, a double-sided adhesive tape, and mechanical interlocking (such as via a hook-and-loop connection).

In still another preferred embodiment, the pneumatic tire is a pneumatic passenger car tire including a speed index selected from one of V, H, ZR, W, Y (preferably one of ZR, W, Y), e.g., provided on one or both sidewalls of the tire.

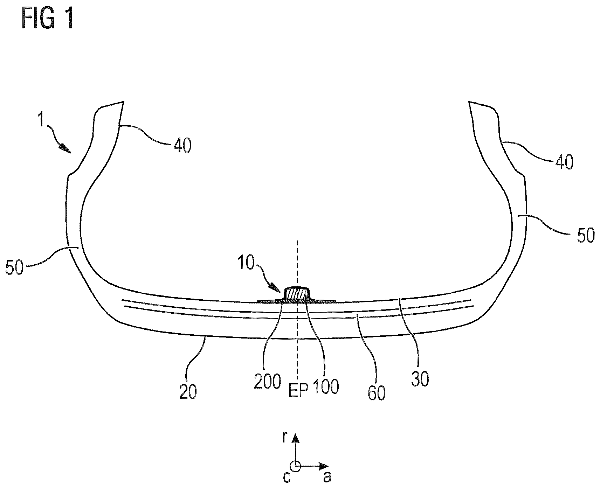

Figure 1 schematically shows a partial cross-section of a pneumatic tire 1 with a tire monitoring device 10 in accordance with an embodiment of the present invention. The tire 1 comprises a pair of axially opposite bead portions 40, a tread portion 20, an innerliner 30 at least partially enclosing a tire cavity of the tire 1, a pair of sidewalls 50 extending essentially radially between the tread portion 20 and a respective one of the bead portions 40, and a belt portion 60 arranged radially between the tread portion 20 and the innerliner 30 in a crown region of the tire 1.

The tire monitoring device 10, which can alternatively also be mentioned as a tire sensor device herein, comprises a sensor unit 100, which is embedded in and (directly) bonded to a sensor unit holder 200. The tire monitoring device 10 and/or its sensor unit holder 200, is attached with its bottom portion and particularly with its bottom surface to the innerliner 30 of the tire 1. For instance, such an attachment is provided by one or more of an adhesive, an adhesive tape (preferably, an adhesive transfer tape or double-sided adhesive tape), a hook-and-loop connection (such as via a Velcro^{™} connection), or, less preferrable by a rubber composition patch (e.g., including the provision of a vulcanization cement). Preferably, the tire monitoring device 10, is applied to the tire after tire cure. Preferably, in order to provide a well-balanced tire, the tire monitoring device 10 is mounted to the innerliner 30 in an axial center region of the tire 1, e.g., in an area which is crossed by the equatorial plane (EP) of the tire 1.

The tire monitoring device 10 typically comprises at least one sensor, such as including at least one tire pressure sensor for determining tire inflation pressure. In addition, or alternatively, the tire monitoring device may comprise one or more of a temperature sensor, a strain sensor, and one or more acceleration sensors. Such sensors can help to monitor the status and/or properties of the tire, such as when being mounted to a rim and/or during driving. Further details about embodiments of tire monitoring devices are described herein below. Typically, a tire monitoring device is adapted to send information, e.g., via its transmitter, based on measurements of said at least one sensor, wirelessly to a receiver, such as to a vehicle computer, a mobile device (e.g., a cell phone, a tablet, or a laptop), and/or a cloud service.

The axial direction a, the circumferential direction c, and the radial direction r, as well as the equatorial plane EP, are indicated for the sake of better comprehensibility in Figure 1. The axial direction a is parallel to the axis of rotation of the tire. The circumferential direction c is parallel to the circumference of the tire and the radial direction r is perpendicular to the axial direction a and the circumferential direction c. It is emphasized that each of these directions can include different orientations so that mentioning one of these directions is not necessarily limited to a specific orientation, unless indicated otherwise herein.

While the tire 1 has been described with respect to the above-mentioned tire components, it is emphasized that the tire 1 may include further components such as one or more carcass plies extending from one bead portion to another bead portion of the pair of bead portions. Also, for example, the tire 1 may comprise further belts than those schematically indicated in Figure 1. Moreover, the tire may comprise one or more overlays between the tread portion and the belt portion. In addition, the tread portion may typically comprise a plurality of tread grooves which are not explicitly shown in Figure 1. Constructional details of the pneumatic tire and its tire components as such are not within the main focus of the present invention and can be chosen by the person skilled in the art depending on the desired application.

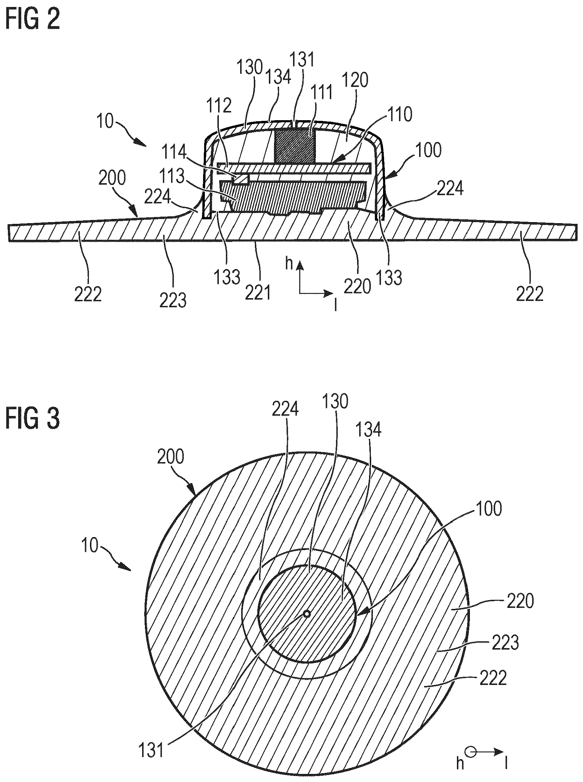

Figure 2 shows an enlarged schematic cross-section of the tire monitoring device 10 shown already in Figure 1. Thus, the tire monitoring device 10 comprises the sensor unit 100 which is embedded in and bonded to the sensor unit holder 200. In the present, and non-limiting embodiment, the sensor unit 100 comprises a sensor assembly 110 which is enclosed, or in other words encapsulated, in an encapsulation material 120 within a hollow container, or in other words, a cap 130. The sensor assembly 110 comprises a sensor 111, which is in the present embodiment a pressure sensor 111, a printed circuit board (PCB) 112 carrying a wireless (e.g., radiofrequency (RF)) transmitter chip and the sensor 111, as well as a battery 113 for powering the sensor 111 and the PCB 112 including the RF transmitter chip. The battery 113 is connected to the PCB 112 via an electrical connector 114.

Preferably, the sensor 111, the PCB 112, the electrical connector 114, and the battery 113 are rigidly connected to one another. Thus, the sensor assembly 110 is provided in the cap 130 and a space between the cap 130 and the sensor assembly 110 is filled with the encapsulation material 120. Preferably, said encapsulation material 120 is a cast resin, or in other words, a casting resin. The encapsulation material 120 holds the sensor assembly 110 in place within in the cap 130. Preferably, the cap 130 can be described as including a cup shape (such as an upside-down cup shape) including an opening towards a bottom surface 221 of the sensor unit holder 200. Preferably, the cap 130 includes a hole 131 (specifically a top hole) forming an air channel allowing the passage of air from the environment of a top portion 134 of the sensor unit 100 to the sensor 111. For instance, if the sensor is a temperature sensor, a temperature measurement of air surrounding the sensor unit 100, such as in a tire cavity can be improved. Or, if the sensor 111 is a tire pressure sensor, air pressure, such as present in a tire cavity, can be determined. A bottom portion 133 of the sensor unit 100 and/or the cap 130 is embedded in and bonded to a top portion 224 of the sensor unit holder 200.

In the present embodiment, the sensor unit holder 200 consists of a polymer-based material 220, which is in this case a cast polyurethane elastomer (as Tecnothane^{™} MPT from Huntsman, USA). In particular, as in the present embodiment, it is possible that such a cast material is cast directly onto the bottom portion 133 of the sensor unit 100 such that it circumferentially encloses the bottom portion 133 of the cap 130 and is, e.g., also in contact with and/or bonded to the encapsulation material 120. Optionally, the polymer-based material 220 of the sensor unit holder 200 also contacts portions of the sensor assembly 110, such as the battery 113, in case the battery 113 is not fully covered by the encapsulation material 120, as in the present embodiment. However, in other embodiments, the battery may be fully enclosed by the encapsulation material so that the polymer-based material of the sensor unit holder is in contact with the encapsulation material below the battery.

In another non-depicted embodiment, the sensor unit may include a cover closing the cap at its bottom portion so that the polymer-based material of the sensor unit holder is bonded to the cover (or, in other words bottom cover) of the cap. For instance, the material of the cap 130, and/or a bottom cover (not shown) is a polymer-based material (preferably a thermoplastic material or polymer), such as a polybutylene terephthalate (PBT) which is preferably glass fiber reinforced (e.g., as a material of the product line Ultradur^{™} from the company BASF, Germany).

Preferably, the bond between sensor unit holder 200 and sensor unit 100 is devoid of an (additional) adhesive. Typically, a top portion 224 of the sensor unit holder 224 extends only (up) to less than 50% of a total (maximum) height of the tire monitoring device 10. The height h is measured perpendicular to the bottom surface 221 of the sensor unit holder 200. An extension perpendicular to the height h of one or more of the sensor unit 100, the sensor unit holder 200, or the whole tire monitoring device 10, is mentioned herein as a lateral extension, and is schematically indicated in Figure 2 only in one direction I. However, a lateral extension can describe any direction perpendicular to the height h herein.

Preferably, the sensor unit holder 200, and particularly its bottom portion 223, laterally extends over a larger area than the sensor unit 100. For instance, a maximum lateral extension of the sensor unit holder 200 and/or its bottom portion 223 and/or bottom surface 221 is preferably within a range of 200% to 600%, preferably 200% to 400% of a maximum lateral extension of the sensor unit 100. In the present embodiment, the lateral circumference of the bottom portion 223 of the bottom includes a circular shape, or in other words contour, as further indicated in Figure 3. However, alternatively, such a shape could, e.g., be polygonal, star-shaped, or elliptical. Optionally, the bottom surface 221 of the sensor unit holder 200 is from 2 to 20 times (preferably from 3 to 15 times) larger than an area of a perpendicular projection of the sensor unit 100 onto the bottom surface 221 of the sensor unit holder 200. In the present example, the bottom surface 221 of the sensor unit holder 200 is about 9 times larger than an area of the projection of the cap 130 (onto said bottom surface 221). Such ratios improve the stability of the connection between the tire monitoring device 10 to a surface of the tire. Preferably, the bottom portion 223 comprises a (preferably flat) flange and/or ring portion 222 surrounding the sensor unit 100.

Figure 3 shows a schematic top view of the tire monitoring device 10, including the sensor unit 100 embedded in and bonded to the sensor unit holder 200. In particular, in the present embodiment, the cap 130 of the sensor unit 100 is laterally, or in other words circumferentially, surrounded by the polymer-based material 220 of the sensor unit holder 200. The hole 131 in the cap 130 and/or a top portion 134 of the sensor unit 100, provides an air passage to the sensor (not explicitly shown in Figure 3) which is covered by the cap 130.

As mentioned above, the tire monitoring device 10 comprises in the present embodiment a sensor unit holder 200 including an essentially circular bottom portion 223, including the flange portion 222. The top portion 224 of the sensor unit holder 200 surrounds the sensor unit 100 and extends into an upper (height) direction. While the lateral shapes of the sensor unit 100 and the sensor unit holder 200 are essentially circular in the present embodiment, other shapes are possible as mentioned herein above. Moreover, the sensor unit 100 may also include one of a polygonal, elliptical, and star-shaped shape instead of the essentially circular lateral shape. As visible in Figure 3, the lateral size of the bottom portion 223 is significantly larger than the lateral size of the sensor unit 100 which helps to provide a firm hold of the tire monitoring device 10 on a surface of a tire, such as on an innerliner as shown in the embodiment of Figure 1.

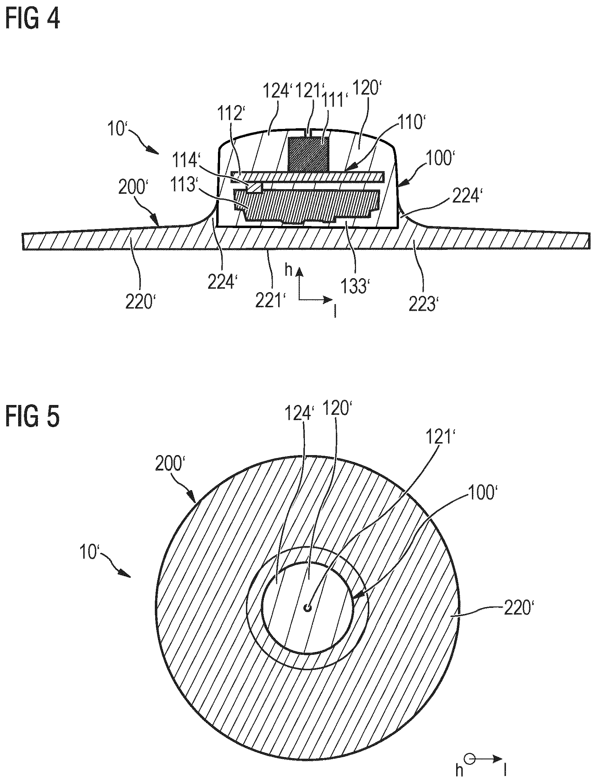

Figure 4 schematically depicts an alternative embodiment of a tire monitoring device 10' which comprises a sensor unit 100' and a sensor unit holder 200'. A main difference between the previously described embodiment and the embodiment of Figure 4 consists in that the sensor unit 100' is devoid of a cap. The sensor assembly 110' is enclosed (and/or encapsulated) by the encapsulation material 120' with an essentially cylindrical shape. The sensor assembly 110' comprises a sensor 111' connected to a printed circuit board 112' which is connected via a preferably rigid electrical connector 114' (e.g., including a plug and socket) to a battery 113'.

For instance, the essentially cylindrical shape of the encapsulation material enclosing the sensor assembly, can be achieved by a hollow cylindrical mold, into which the sensor assembly is positioned and wherein the hollow space between the sensor assembly 110' and said mold is filled with a liquid polymer material, such as a cast resin. In principle, such an encapsulation material 120', such as a cast resin, can be the same as mentioned herein above in relation to the embodiment of Figure 1. In order to provide an air passage to the sensor 111', it is possible to provide a bore in the encapsulation material, or a corresponding (or in other words complementary) protrusion in the mold to provide the air passage or hole 121' to the sensor 111' in a top portion 124' of the sensor unit 100' after demolding. The encapsulation material 120', such as the cast resin, may be liquid during molding and cure at room temperature. Alternatively, such available materials may be cured by heating, such as over multiple hours. The handling of such cast resins and their application onto electric assemblies are as such known to the person skilled in the art.

In order to bond the polymer-based material 220' of the sensor unit holder 200' to the (cured) encapsulation material 120' it is also possible to provide a (second) mold including the desired form or outer contour of the sensor holding portion 200'. Optionally, such a mold includes a receptacle for receiving (and/or previously molding) the sensor unit 100' and a hollow space for receiving the polymer-based material of the sensor holder 200' to be manufactured. Then, the polymer-based material, such as a cast polyurethane elastomer, may be cast onto the bottom portion 133' of the sensor unit 100' so as to surround the bottom portion 133' of the sensor unit 100' and/or the encapsulation material 120' and to cover the bottom portion 133' (perpendicular to its height h). Thus, a bottom portion 133' of the sensor unit 100' is surrounded by an annularly and/or upward protruding (with respect to a bottom surface 221' of the sensor unit holder 200') top portion 224'. In the present embodiment, the encapsulation material 120' defines the outer shape of the sensor unit 100' and is directly bonded to the polymer-based material 220' of the sensor unit holder 200'. Preferably, the sensor unit holder 200', including its top portion 224' and its bottom portion 223' with its bottom surface 221' consists of said polymer-based material, which is preferably a cast elastomer, such as said cast polyurethane elastomer.

Figure 5 shows a schematic top view of the tire monitoring device 10' shown already in Figure 4, wherein the sensor unit 100' is embedded in and bonded to the sensor unit holder 200'. The encapsulation material 120' of the sensor unit 100' is directly bonded to the polymer-based material 220' of the sensor unit holder 200', i.e., in the absence of an adhesive. The hole 121' in the top portion 124' of the sensor unit 100', particularly in its encapsulation material 120', provides an air passage to the sensor below (not explicitly shown in Figure 5). While the encapsulation material 120' has been described herein as including an essentially cylindrical shape, this shall also include domed cylindrical shapes such as shown already in Figure 4. Further features and/or geometries mentioned in relation to the embodiment of Figures 2 and 3 may also apply to the embodiment of Figures 4 and 5.

In accordance with another aspect of the present invention, the invention is directed to a method of manufacturing a tire monitoring device, such as the tire monitoring device in accordance with the above aspect, or one or more of its embodiments.

In one embodiment, the method comprises one or more steps of:
Providing a sensor assembly (e.g., with components as described herein above);
Placing the sensor assembly into a mold, such as enclosing an essentially cylindrical hollow space (optionally, the mold can be a polymer cap or comprise a polymer cap, such as a thermoplastic polymer cap as mentioned herein above);
Casting a resin, or in other words a casting resin, into the mold to at least partially enclose the sensor assembly (wherein preferably each component of the sensor assembly is at least predominantly enclosed/encapsulated by the casting resin);
Curing (preferably, thermally curing) the resin to obtain a sensor unit including the sensor assembly enclosed in the resin, and optionally the at least a portion of the mold, such as the cap;
Casting a polymer-based material, such as said cast elastomer, e.g., a (cast) polyurethane elastomer, onto a portion of the sensor unit to surround and/or embed the sensor unit, preferably over less than half of a height of the sensor unit; and
Curing (preferably, thermally curing) the polymer-based material, such as the cast elastomer, e.g., a cast polyurethane elastomer to obtain a sensor unit holder bonded (particularly, cast to) the sensor unit and to embed the sensor unit in the sensor unit holder, and/or forming together the tire monitoring device.

In accordance with yet another aspect of the present invention, the invention is directed to a method of manufacturing a tire, including a tire monitoring device, according to one or more of the above-mentioned aspects and/or their embodiments, the method comprising one or more of the following steps:
Providing a tire, preferably a pneumatic tire, comprising an innerliner at least partially enclosing a tire cavity of the tire;
Providing a tire monitoring device in accordance with one or more of the above-mentioned aspects and/or their embodiments; and
Attaching the tire monitoring device, such as with a bottom portion and/or bottom surface of the sensor unit holder, preferably to the innerliner of the tire. Thus, the sensor unit extends away from the innerliner and/or the sensor unit holder into the tire cavity.

In particular, the tire monitoring device may be manufactured including method steps mentioned in relation to the above-mentioned method of manufacturing the tire monitoring device.

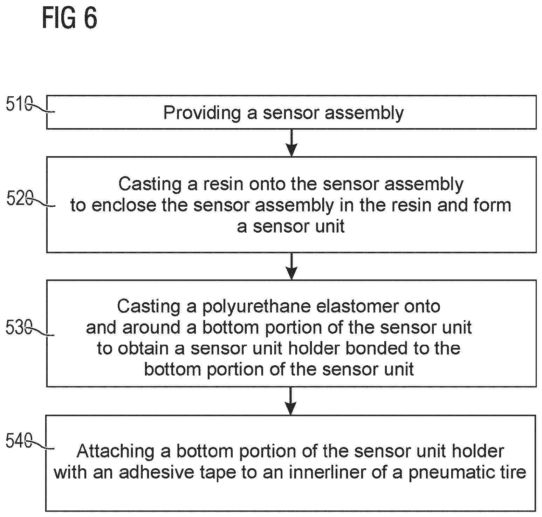

Figure 6 provides a flow chart of a preferred embodiment of a method of manufacturing a tire monitoring device and a tire comprising the tire monitoring device, such as including a tire monitoring device according to one or more of the previously mentioned aspects and/or embodiments.

According to step 510 of Figure 6, a sensor assembly is provided. A second step 520 according to Figure 6 includes casting a resin onto the sensor assembly to enclose the sensor assembly in the resin and form a sensor unit. In a sub-step, it is optionally possible to provide a hollow cap (such as a cap comprising a thermoplastic polymer) and to provide the sensor assembly in the cap and casting the resin onto the sensor assembly within the cap. Then the sensor assembly can be bonded by the resin to the cap. The cap may be part of the sensor unit. A further optional sub-step can include curing the resin. Step 530 according to Figure 6 includes casting a polyurethane elastomer onto and around a bottom portion of the sensor unit to obtain a sensor unit holder bonded to the bottom portion of the sensor unit (wherein the sensor unit is embedded in the sensor unit holder). Thus, preferably, an additional adhesive is neither used nor required for attaching the sensor unit holder to the sensor unit.

A fourth method step 540 includes attaching a bottom portion of the sensor unit holder with an adhesive to an innerliner of a pneumatic tire (e.g., radially below a tread portion). Preferably, one or more adhesives may be provided via an adhesive tape. Such an adhesive tape is preferably an adhesive transfer tape (such as available from the company 3M^{™}, USA). Transfer tapes are typically devoid of a carrier foil between opposite adhesive surfaces of the tape. Alternatively, a double-sided adhesive tape may be used, which typically includes a carrier foil between two opposite adhesive layers (such double-sided adhesive tapes are, e.g., also available from the company 3M^{™}, USA). In other words, in a preferred option, a bottom portion of the sensor unit holder is attached with an adhesive tape to the innerliner of the pneumatic tire. Of course, it is possible that such a method may include further previous steps, and/or intermediate steps which are not explicitly mentioned herein.

It is emphasized that embodiments and/or features of one of the abovementioned aspects may also be embodiments and/or features of another one of the abovementioned aspects. Moreover, multiple embodiments or features thereof may be combined with one another.

## Claims

1. A tire monitoring device comprising a sensor unit (100) comprising a sensor assembly (110) and an encapsulation material (120), wherein the sensor assembly (110) is at least predominantly enclosed by the encapsulation material (120), and a sensor unit holder (200), wherein the sensor unit holder (200) includes i) a bottom portion (223) comprising a bottom surface, and ii) a top portion (224), which is opposite to the bottom portion (223), and wherein the sensor unit (100) is embedded in and bonded to the top portion (224).

2. The tire monitoring device according to claim 1, wherein the sensor unit holder (200) comprises a polymer-based material (220), and, preferably, wherein the sensor unit (100) is embedded in and bonded to the polymer-based material (200) in the top portion (224) of the sensor unit holder (200).

3. The tire monitoring device according to claim 2, wherein
(i) the polymer-based material (220) is one or more of a polyurethane based material and a cast elastomer material; and/or
(ii) the sensor unit holder (200) is at least predominantly made of the polymer-based material (220); and/or
(iii) the polymer-based material (220) is a cast elastomer, preferably cast polyurethane elastomer, a cast on the sensor unit (100) and forming the top portion (224) bonded to the bottom portion (133) of the sensor unit (100).

4. The tire monitoring device according to at least one of the previous claims, wherein an interface between the sensor unit (100) and the sensor unit holder (200) is devoid of an adhesive.

5. The tire monitoring device according to at least one of the previous claims, wherein the polymer-based material (220) includes or has one or more or all of:
an elongation at break which is by 50% higher than the elongation at break of the encapsulation material (120), determined according to ISO527-2;
a Shore-A hardness which is at least 5 Shore-A larger than a Shore-A hardness of the encapsulation material (120), determined according to ISO 7619-1; and
a tensile strength which is at least 5 MPa larger than a tensile strength of the encapsulation material (120), determined according to ISO 527-2.

6. The tire monitoring device according to at least one of the previous claims, wherein the polymer-based material (220) includes or has one or more or all of:
an elongation at break of at least 400%, determined according to ISO 527-2;
a heat conductivity of at least 0.1 W/(m·K), determined according to ISO 22007-2:2008;
a Shore-A hardness within a range of 50 to 99, determined according to ISO 7619-1; and
a tensile strength of at least 12 MPa, determined according to ISO 527-2.

7. The tire monitoring device according to at least one of the previous claims, wherein the encapsulation material (120) is selected from one of a polyurethane-based resin and a polyester-based resin.

8. The tire monitoring device according to at least one of the previous claims, wherein the encapsulation material (120) includes or has one or more or all of:
an elongation at break within a range of 300% to 350%, determined according to ISO 527-2;
a heat conductivity of at least 0.1 W/(m·K), determined according to ISO 22007-2:2008;
a glass transition temperature of less than -45°C, determined according to ISO 11359-2:1999-10;
a Shore-A hardness within a range of 40 to 99, determined according to ISO 7619-1;
a tensile strength within a range of 0.5 MPa to 11 MPa, determined according to ISO 527-2; and
an electric volume resistivity of more than 10⁹ Ohm·cm, determined according to DIN EN 62631-3-1:2016.

9. The tire monitoring device according to at least one of the previous claims, wherein the sensor assembly (110) comprises a sensor (111), a printed circuit board (112), a wireless transmitter, and an electric power source (113); and wherein the encapsulation material (120) encloses at least predominantly each of the sensor (111), the printed circuit board (112), the wireless transmitter, and the electric power source (113).

10. The tire monitoring device according to at least one of the previous claims, wherein the sensor unit (100) comprises a cap (130) at least partially enclosing the sensor assembly (110) and the encapsulation material (120), wherein a bottom portion of the cap (130) is embedded in and bonded to the sensor unit holder (200) , and wherein a top portion of the cap (130) extends out of the sensor unit holder (200).

11. The tire monitoring device according to at least one of the previous claims, wherein the tire monitoring device (10) includes or has a tire monitoring device height measured perpendicular to and from a bottom surface of the sensor unit holder (200) to an outermost top surface of the sensor unit (100), and wherein the sensor unit holder (200) includes or has one or more of: i) a height of less than 50% of the tire monitoring device height, and ii) a height of less than 50% of a total height of the sensor unit (100), measured perpendicular to the bottom surface of the sensor unit holder (200).

12. A tire comprising the tire monitoring device (10) according to at least one of the previous claims.

13. The tire according to claim 12, wherein the tire (1) is a pneumatic tire comprising a tread portion (20) and an innerliner (30) at least partially enclosing a tire cavity of the tire (1), and wherein the tire monitoring device (10) is attached onto the innerliner (30) of the tire (1) radially below the tread portion (20).

14. The tire according to claim 12 or 14, further comprising one or more of a double-sided adhesive tape and a transfer adhesive tape, wherein the tire monitoring device (10) is attached with a bottom surface of the sensor unit holder (200) to the innerliner (30) via the one or more of the double-sided adhesive tape and the transfer adhesive tape.

15. The tire according to at least one of the claims 12 to 14, wherein the pneumatic tire (1) is a pneumatic passenger car tire including a speed index selected from one of ZR, W, and Y.
